Europäisches Patentamt

European Patent Office

Office européen des brevets

(11) Publication number: **0 379 201**
**A2**

## EUROPEAN PATENT APPLICATION

(21) Application number: **90101026.4**

(51) Int. Cl.⁵: **A61C 3/02**

(22) Date of filing: **18.01.90**

(30) Priority: **19.01.89 US 299864**

(43) Date of publication of application:
**25.07.90 Bulletin 90/30**

(84) Designated Contracting States:
**CH DE FR GB IT LI SE**

(71) Applicant: **DENTSPLY INTERNATIONAL, INC.**
**570 West College Avenue P.O. Box 872**
**York Pennsylvania 17405(US)**

(72) Inventor: **Dulaney, Carl E.**
**858 Woodcrest Drive, Apt. E-1**
**Dover, Delaware 19901(US)**

(74) Representative: **Wächtershäuser, Günter, Dr.**
**Tal 29**
**D-8000 München 2(DE)**

(54) **Dental and medical tool.**

(57) A dental or medical cutting tool comprised of ceramic characterized by atoms having atomic numbers of 73 or lower and having cutting edges formed therein.

# DENTAL AND MEDICAL TOOL

This invention relates to cutting tools of the dental and medical type and in particular to such tools constructed of ceramic.

Dental and medical tools for cutting have been known for a long time. Such tools are usually formed in whole or in part of metal and frequently have cutting edges machined into them or abrasive particles such as diamonds or carbide chips bonded to them.

Polishing stones or ceramic wheels of aluminum oxide, known as white stones, have been used for polishing or delicate abrading of dental restoratives. Polishing, grinding or delicate abrading is distinguished from cutting in the present application on the basis of aggressive or material reduction of a surface as compared to a smoothing, mild reduction and/or shining of the surface. Cutting is the use of an edge to scrape, chip, fracture, peel or penetrate the surface and remove or sever. For textural description see Skinners Science of Dental Materials eighth edition, 1982, W. B. Saunders Company, Philadelphia, chapters 35 and 36. As used in this patent application a designed edge is of the type that is typically machined or ground into a mandrel or blank as contrasted to the random configuration of, for example, the following three abrasive dental instrument types:

1. Coated abrasive - abrasive particles of given size or dimension are placed on a supporting surface using adhesive binder.

2. Bonded abrasive - Abrasive particles are mixed in a binder and cast or sintered; the instruments can be flexible or hard.

3. Loose abrasive - applied to a surface to be abraded in non bond form, for example in paste.

It has also been known in the past to make the working head of a dental cutting bur from tungsten carbide ceramic by welding a tungsten carbide pellet onto a steel shank and then machining the cutting edge geometry desired. It has also been known to construct dental burs entirely out of tungsten carbide ceramic.

It is an object of the invention to provide superior dental and medical grinding and cutting tools.

It is a further object of the invention to provide dental and medical tools of reduced cost.

It is another object of the invention to provide dental and medical tools that are inherently biocompatible.

It is yet a further object of the invention to provide dental and medical tools providing the user with greater tactile sense.

Another object of the invention is to provide a cutting instrument that has an abrading, burnishing, smoothing effect.

A further object of the invention is to provide dental and medical tools that lend themselves to enhanced sterilization procedures and reduce pollution inherent with certain metal tool manufacture.

Yet another object of the invention is to eliminate the risk of contaminating dental composite fillings with metal particles from metal for metallic finishing burs.

## DESCRIPTION OF THE DRAWINGS

FIG. 1 illustrates a dental bur embodying the present invention with the shank broken away.

FIG. 1a is an end view of the dental bur of FIG 1.

FIG. 2 is an alternate embodiment similar to FIG. 1.

FIG. 2a is an end view of the dental bur of FIG 2.

FIG. 3 illustrates a dental bur of different geometry.

FIG. 3a is an end view of the dental bur of FIG 3.

FIG. 4 illustrates a dental finishing bur embodying the present invention again with the shank broken away.

FIG. 4a is an end view of the dental finishing bur of FIG. 4.

FIG. 5 illustrates another dental bur geometry.

FIG. 5a is an end view of the dental bur of FIG 5.

FIG. 6 illustrates a dental file embodying the present invention.

FIG. 7 is a cross-section taken in the direction of 7-7 of FIG. 6.

FIG. 8 illustrates a handle suitable for hand use equipping of the dental file of FIG. 6.

## DESCRIPTION OF THE PREFERRED EMBODIMENT

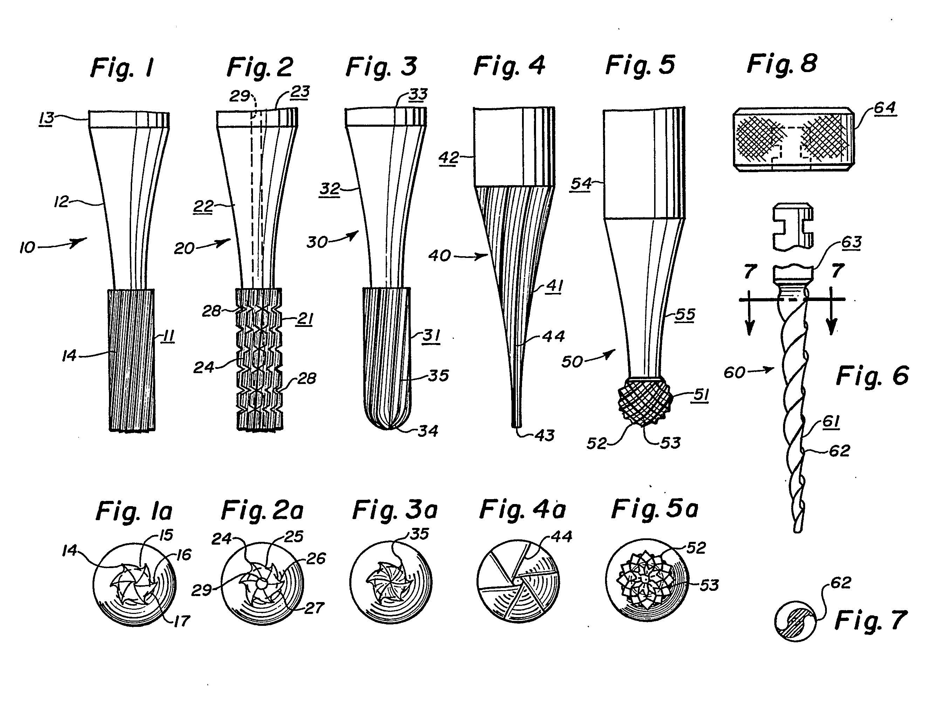

The present invention in one preferred embodiment is a dental fissure cutting bur, of the type illustrated in FIGS. 1 and 1a. This is but one example of a multitude of possible examples of dental and medical cutting tools of the present invention. Looking at FIGS. 1 and 1a, the fissure bur 10 has a working cutting portion 11, a neck portion 12 and a shank portion 13. The shank portion 13 is for insertion into the tool socket of a handpiece (not shown) to mount the tool for use.

The neck portion 12, is to extend the working portion 11 a convenient distance from the dental handpiece which in the present instance would rotate the rotary dental bur to typically remove enamel and/or dentin tooth structure or existing dental restoration to prepare a tooth for restoration.

The working portion 11 of the dental bur 10 has a plurality of six blades each of which has a cutting edge 14, separated by flutes 15, machined into the shaft of the working portion or head 11. The rake 16 is the side or surface of a flute normally facing toward the direction of rotation and the land 17 is the side or surface of a flute normally opposite or trailing the direction of rotation from a cutting edge 14. The entire dental bur 10 is preferably machined to geometric shape in conventional manner from a single piece of ceramic rod stock without coating or otherwise treating the rod stock. Preferably rod stock will have the circumferential dimension of the shank so that only the neck portion and the blades or flights 14 need to be machined to the devised geometric shape. The flights are machined to the geometry that will best accommodate their intended use. It will be understood that the cutting edges 14 are relatively parallel with the axis of the bur which is the central axis through the shank 13, neck 12 and working portion or head 11. While the cutting edges extend longitudinally lengthwise with the axis of the bur they are off-set, preferably less than $45°$, more preferably less than $30°$. The dental bur rotates about its axis.

By ceramic it is meant a body of crystalline or partly crystalline structure, or of glass, which body is produced from essentially inorganic, nonmetallic substances and either is formed from a molten mass which solidifies on cooling, or is formed and simultaneously or subsequently matured by the action of heat. The ceramics of the present invention are those characterized by consisting essentially of atoms having atomic numbers of 73 or lower and in the more preferred ceramic atoms having atomic numbers of 50 or lower. By this it is meant that the ceramic would not have more than a trace of another element of higher atomic number, a few percent, even though this trace could have a material effect on the ceramics structure, such as the crystalline structure.

The preferred ceramics are those based on alumina ($Al_2O_3$), in which alumina is the essential crystalline phase. Preferably the alumina makes up 90%, more preferably 95% and most preferably 97% or more of the non-fiber mass of the tool. Other ceramics are suitable in many applications and among them by way of example are Tantalum Boride (TaB), Zirconium Oxide ($ZrO_2$), Lanthanum Triboride ($LaB_3$), Silicon Carbide (SiC), Boron Carbide ($B_4C$), Boron Nitride (BN), Titanum Diboride ($TiB_2$) and Silicon Nitride ($Si_3N_4$) and Aluminum Nitride (AIN) based ceramics. The ceramic material would preferably instrinsically have Rockwell "C scale" hardness values of 70 to 90, more preferably 80 to 88, and most preferably 83 to 86 with sufficient ductility to overcome fracture during manufacture and use.

Preferably the ceramics are homogenous in composition and formed by extrusion with subsequent sintering. Such ceramics may contain a Polyvinylchloride (PVC) binder as an extrusion aid which is dissipated during sintering and magnesium oxide as a crystallization aid. The more preferred ceramics are crystalline based. Preferably such ceramics have a crystallinity in excess of 50%, more preferably 90%. Preferably the ceramic is homogenous throughout. By the ceramic being homogenous throughout it is meant that there are no coatings or substantive identifiable layers but as used here the term homogenous throughout includes within its scope the uniform distribution of fibers throughout the ceramic body or mass and also the inclusion of channels and voids made for purposes of cooling and the like. Organic and inorganic fibers may be used. The fibers that are preferred in some applications are ceramic fibers such as silicon carbide wiskers or fibers or glass fibers. Many ceramics such as those named earlier may be formed into fibers. An important feature of the invention is the ability to alter the physical characteristics of the substrate material depending on the end use. For example, a more flexible (less brittle) ceramic may be desirable for cutting instruments such as endodontic files, while more rigid materials would be suitable for burs. It is to be understood that in the preferred embodiment the entire tool is made from a homogeneous mass of ceramic.

In addition to the good characteristics of the dental cutting bur in its cutting function of yielding a more tactile quality and the appearance of a grinding effect with the cutting, the ceramic is more biocompatible than such instruments containing metal, such as steel. If an instrument is broken and a piece lodged in a bone, for example, their would be a significant danger of corrosion and irritation from the metal and these are less likely with tools made wholly of ceramic.

Other preferred dental embodiments of the present invention are shown in the drawing. Looking at Figs. 2 and 2a, fissure cutting bur 20 may be seen with working cutting portion or head 21, neck portion 22 and shank portion 23. The cutting edges 24 have cross cuts 28. The cross cuts through the cutting edge allow the flutes to be joined to aid self-cleaning.

The dental bur 20 has a channel or bore 29 extending axially therethrough. This channel can supply cooling means such as a liquid, which by way of example may be water or a medicament, through the dental bur.

Another dental cutting bur is shown in Figs. 3 and 3a. Looking at Figs 3 and 3a, fissure cutting bur 30 may be seen with working cutting portion or head 31, neck portion 32 and shank portion 33. The working cutting portion 32 has a rounded tip 34. The cutting edges 35 extend on the rounded tip 34.

Yet another preferred dental cutting bur is shown in Figs 4 and 4a. Figs 4 and 4a illustrate a finishing bur 40 having a cutting portion or head 41 which extends directly from the shank portion 42. The tip of the finishing bur 40 has a blunt end 43 to reduce the danger of unintentional gouging of a patient. The working portion 41 has a plurality of cutting edges 44.

Figs. 5 and 5a illustrate a dental cutting bur 50 having a working surface 51 of raised points 52 and channels 53 to cut down hard dental structure. The dental bur 50 has a shank 54 and a neck 55.

A different but still preferred dental tool for application of the present invention is a dental endodontic file such as the one shown in U. S. Patent 4,332,561. This dental file is illustrated in Figs. 6, 7 and 8. The dental file 60 has a working portion 61 having cutting edges 62 and a shank portion 63 which may either be mounted in a dental handpiece or be equipped with a handle 64 for manual manipulation by the fingers.

The most preferred embodiment of my invention is the aggressive rotary dental bur which has multiple blades that are uniformly dimensioned within the bur with cutting edges and displays the apparent activity of both a cutting and burnishing effect. Another preferred embodiment is the finishing bur which has the special advantage where engagement might occur with unintended tooth structure. This would be maximized by selecting a ceramic material of a hardness between the enamel tooth structure and the composite. Tools made from ceramic could in some instances be economical enough so that they can be disposed of after treating each patent which provides superior protection against the spread of disease. Alternatively, the ceramic cutting tools can be easily sterilized either by autoclave or cold sterilization without encountering corrosion.

In yet another preferred embodiment of the present invention the cutting tools of the present invention are adapted for working to reduce or sever bone. An example of such devices would be burs such as shown in FIGS. 1, 2 and 3, except with elongated head, neck and shank. Many different configurations exist for medical burs.

The present invention offers many other advantages. In the conventional manufacture of dental burs for instance, it is usually necessary to provide a steel shank and/or shaft and either a carbide pellet end or diamond cutting surfaces which adds expense. The manufacture of the ceramic tools is simple and direct without such requirements. The geometry is simply machined directly into the tool. It may be appropriate to directly cast or extrude the needed geometry in many instances.

It is envisioned to use advanced ceramics such as Silicon Nitride ($Si_3N_4$), $Al_2O_3$, AlN, $B_4C$, $TiB_2$, BN, SiC.

Other improved features provided by the present invention include: one piece bur construction which could potentially eliminate breakage that commonly occurs at junctures due to welding metal parts such as the carbide pellet onto the steel shank in some current processes; eliminating galvanic corrosion which enhances effective sterilization techniques especially cold sterilants that weaken metal tools, and providing convenient ability to color code the tools by pigmenting the ceramic to create easy recognition of different tools that are similarly sized and shaped.

## EXAMPLES

In the following Examples, dental burs of the present invention were prepared as indicated and evaluated by a dentist familiar with the performance of dental burs. The dentist's evaluations and observations are given in the Examples.

## EXAMPLE 1

Five dental burs were prepared. They were #57 fissure burs substantially as illustrated in FIGS. 1 and 1a. The dental burs were shaped from a rod of ceramic 0.072 inch alumina solid rod ground to 0.0630 inch maximum to 0.06025 minimum diameter (supplied by Semicon Tools Inc., 55 Webster Avenue, New Rochelle, New York 10801. The rod was notched with a diamond wheel and snapped (broken) to lengths of 0.780 inch and provided with the illustrated geometry by machining using an automatic bur grinder.

The dental fissure burs were then tested using a high speed Midwest Quite Air dental handpiece operated at 30 to 40 psi air pressure. This was done by 1st cutting a Class II mesio occlusial cavity preparation in an extracted human molar tooth. The dental burs had excellent control and did the job in a reasonable time period. Two of the burs were used to prepare occlusal preparations in other extracted teeth. The tactile sense of the Dentist performing the test through dental preparation indicated the ceramic burs were superior to the tungsten carbide burs, potentially making a bur of this type especially superior in preparing dental crown and bridge margins, where superior control is especially helpful.

The other two dental burs were tested in comparison with tungsten carbide working end burs (#57 burs -Caulke® Super Bur® a product of Dentsply International Inc.) An extracted human molar tooth was held in the hand and a carbide bur rotated at high speed and uniform maximum normal pressure used by the dentist was applied such that the bur cut directly into the buccal enamel wall for 20 seconds timed by a stop watch. The bur was stopped and removed from the penetrating cut and the depth of penetration measured using a metal Boley measurement gauge. The identical procedure was then performed with a ceramic bur rotating and oriented in the same manner, in the same buccal surface 3 mm from the initial cut. The Boley gauge depth for the carbide bur was approximately 10 mm and for the ceramic bur approximately 6 mm. The test was repeated on another tooth with same results.

Of the 5 ceramic burs, one broke. Some wear was visually evident under 70x magnification. The useful life on the basis of observation to date would be 2 or 3 operations.

A chief concern was that one of the operations appeared to cause some burning of the dentin. This could have been due to such phenomenon as the heat transfer coefficient or the relatively less sharp cutting edges microscopically evident as compared to the carbide burs.

Visual observation indicated that the condition of the teeth prepared was satisfactory. No cracks or fracture areas were observed.

It was observed that there appeared to be a very unique effect that combined the cutting of a carbide bur with the grinding effect of a diamond bur without encountering the usual amount of debris buildup in the tool with resultant clogging of the tools operation. The sample size and quality are not yet considered statistically significant or even indicative of final performance.

EXAMPLE 2

Two dental burs identified as #1157 fissure burs substantially as illustrated in Figs. 3 and 3a were shaped from a rod of ceramic identical to that described in Example 1 in the manner described in Example 1.

The fissure burs were then tested and compared to the ceramic dental fissure burs of Example 1. This was done by preparing a Class I occlusal on an extracted human molar. From visual observation the ceramic dental burs of Example 2 had a cutting rate approximating the cutting rate of the ceramic burs of Example 1 in terms of side cuts that were made. In the case of end cuts penetration was more efficient. The tactile sense was the same as with the ceramic burs of Example 1. The property of cutting and grinding effect at the same time also seemed to be present without undue clogging of the tools operation. These burs could be used like a diamond to reduce tooth structure for extra coronal restorations.

EXAMPLE 3

Three #T9 finishing burs substantially as illustrated in Figs. 4 and 4a were shaped from a rod of ceramic identical to that of Example 1 in the manner described in Example 1.

The finishing burs were then tested. This was done by finishing a Class V dental composite filling of PRISMA FIL®, L. D. Caulk Company. The performance appeared to contrast with the usual composite finishing which is done with a bur such as those made of T9 tungsten carbide. The performance was more nearly comparable to regular carbide burs and did not cause any greater reduction in enamel than that of a regular carbide bur. Again the tactile sense of the ceramic burs was superior to that of regular finishing burs. It is projected that such ceramic finishing burs might prove more versatile and also perform very well in refining and finishing margins for extra coronal restorations.

From observation, there appeared to be the very unique effect that combined the cutting with a grinding effect without the usual buildup of debris in the tools working portion, clogging the tools operation.

It is concluded from the above test that particularly if the price of the ceramic burs were lower than the price of carbides by 20 to 30%, a dentist would use them 1/2 to 2/3rds of the time compared to carbide burs. The ceramic burs were, in the dentist's opinion, superior to or equal in performance in Class I preparation but slow for Class II preparations. The ceramic burs were especially valuable for margin preparation and where contact with an adjacent tooth might occur such as in a Class II cavity preparation.

It will be obvious to those skilled in the art that various changes and modifications may be made in the invention without departing from its true spirit and scope. It is, therefore, aimed in the appended claims to cover all such equivalent variations as fall within the true spirit and scope of the invention.


**Claims**

1. Dental or medical cutting tool comprising ceramic characterized by atoms having atomic numbers of 73 or lower having at least one designed edge formed therein.

2. The dental or medical cutting tool of Claim 1 comprising a dental cutting bur.

3. The dental or medical cutting tool of Claim 1 comprising an endodontic file instrument.

4. The dental or medical cutting tool of Claim 1 comprising cooling means.

5. The dental or medical cutting tool of Claim 4 wherein said cooling means comprises at least one channel extending axially through said dental or medical cutting tool and connectable to a source of cooling fluid and said ceramic is characterized by atoms having atomic numbers of 50 or lower.

6. The dental or medical cutting tool of Claim 1 comprising a plurality of designed edges for cutting and wherein said ceramic is characterized by alumina, and having a Rockwell "C scale" hardness of about 83 to about 86 and a crystallinity of about 90% or more.

7. A dental cutting tool comprising ceramic characterized by atoms having atomic numbers of 73 or lower with a plurality of cutting designed edges formed therein.

8. The dental cutting tool of claim 7 comprising a plurality of flutes respectively separating said plurality of cutting edges.

9. The dental cutting tool of Claim 7 wherein said cutting edges are the upper edge of a rake surface.

10. The dental cutting tool of Claim 7 consisting essentially of ceramic.

11. The dental cutting tool of Claim 9 wherein said ceramic is homogeneous.

12. The dental cutting tool of Claim 10 wherein said ceramic is at least 90% alumina.

13. The dental cutting tool of Claim 7 wherein said ceramic is characterized by atoms having atomic numbers of 50 or lower and has a Rockwell "C scale" hardness of about 70 to about 90 and a crystallinity of about 50% or more.

Fig. 8

Fig. 6

Fig. 7

Fig. 5

Fig. 5a

Fig. 4

Fig. 4a

Fig. 3

Fig. 3a

Fig. 2

Fig. 2a

Fig. 1

Fig. 1a